(19) Europäisches Patentamt
European Patent Office
Office européen des brevets

(11) **EP 4 557 104 A1**

(12) **EUROPEAN PATENT APPLICATION**

(43) Date of publication:
**21.05.2025 Bulletin 2025/21**

(21) Application number: **23210159.2**

(22) Date of filing: **15.11.2023**

(51) International Patent Classification (IPC):
**G06F 11/30** $^{(2006.01)}$   **G06N 20/00** $^{(2019.01)}$

(52) Cooperative Patent Classification (CPC):
**G06F 11/302; G06N 20/00**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **British Telecommunications public limited company**
**London E1 8EE (GB)**

(72) Inventor: **The designation of the inventor has not yet been filed**

(74) Representative: **British Telecommunications public limited company**
**Intellectual Property Department**
**9th Floor**
**One Braham**
**Braham Street**
**London E1 8EE (GB)**

(54) **MACHINE LEARNING MODEL MONITORING**

(57)   Methods, system, and apparatus are disclosed for machine learning model monitoring in which the model is trained by a training process based on training data to model an approximation of a function such that, in use, the model generates output data for given input data. In one aspect, a computer-implemented method is disclosed comprising the steps of;
triggering retraining of the model by a first logic component, responsive to monitoring output generated by the model, wherein the first logic component is defined based on a configuration including a definition of an acceptable measure of effectiveness of the model and one or more characteristics of the first logic component and triggering adjustment of the first logic component by a second logic component, responsive to monitoring a consistency of input data to the model, the adjustment including adjusting the configuration.

Figure 1

# Description

## Technical Field

The present invention relates to monitoring of a software model. In particular it relates to monitoring of a trained model as an approximation of a function.

## Background

Machine learning algorithms are increasingly deployed to address challenges that are unsuitable for being, or too costly to be, addressed using traditional computer programming techniques. Increasing data volumes, widening varieties of data and more complex system requirements tend to require machine learning techniques. It can therefore be necessary to produce models that can analyse larger, more complex data sets and deliver faster, more accurate results and preferably without programmer intervention.

Many different machine learning algorithms exist and, in general, a machine learning algorithm seeks to approximate an ideal target function, f, that best maps input variables x (the domain) to output variables y (the range), thus:

$$y = f(x)$$

The machine learning algorithm as an approximation of f is therefore suitable for providing predictions of y. Supervised machine learning algorithms generate a model for approximating f based on training data sets, each of which is associated with an output y. Supervised algorithms generate a model approximating f by a training process in which predictions can be formulated based on the output y associated with a training data set. The training process can iterate until the model achieves a desired level of accuracy on the training data which is associated with an output y. Supervised algorithms generate a model approximating f by a training process in which predictions can be formulated based on the output y associated with a training data set. The training process can iterate until the model achieves a desired level of accuracy on the training data.

The efficacy of models so trained is dependent on the model's training and may change as input data to the model changes in a way that constitutes a departure from consistency with data used to train the model. Additional training data typically generates models more closely approximating function f(x), though over time the function f(x) itself may change as the modelled environment evolves. Additionally, as context changes, such as the nature of input data for the model, so accuracy of the prediction of the model can vary. Retraining the model may therefore be occasioned. Retraining the model is a resource intensive exercise and is preferably restricted to only when necessary. It is therefore desirable to manage the retraining of models to reduce resource consumption.

## Summary of the Invention

According to a first aspect of the invention, there is provided a computer-implemented method for monitoring a machine learning model, wherein the model is trained by a training process based on training data to model an approximation of a function such that, in use, the model generates output data for given input data. The method having the steps of: triggering retraining of the model by a first logic component, responsive to monitoring output generated by the model, wherein the first logic component is defined based on a configuration including a definition of an acceptable measure of effectiveness of the model and one or more characteristics of the first logic component; and triggering adjustment of the first logic component by the second logic component, responsive to monitoring a consistency of input data to the model, the adjustment including adjusting the configuration.

According to preferred embodiments, any of the first and second logic components are hardware, software, firmware or combination components.

According to preferred embodiments, the characteristics of the first logic component include one or more of: an identification of one or more criteria for evaluating a measure of effectiveness of the model; an identification of a method for retraining the model; and an identification of a classification method for the model.

According to preferred embodiments, the configuration is stored in a file or a database.

According to preferred embodiments, the acceptable measure of effectiveness includes one or more of: predetermined performance metrics; one or more measures of an extent of uptime of the machine learning model; and one or more measures of an effectiveness of data security of the machine learning model.

According to second aspect of the invention, there is provided a system comprising: a first logic component arranged to trigger retraining of the model responsive to monitoring output generated by the model, wherein the first logic component is defined based on a configuration including a definition of an acceptable measure of effectiveness of the model and one or more characteristics of the first logic component; a second logic component arranged to trigger adjustment of the first logic component responsive to monitoring a consistency of input data to the model, the adjustment including adjusting the configuration.

According to according to the third aspect of the invention, there is provided a computer system for including a processor and memory storing computer program code for performing the steps of a method according to the first aspect.

According to according to the fifth aspect of the invention, there is provided a computer program element comprising computer program code to, when loaded into a computer system and executed thereon, cause the computer to perform the steps of a method according to the first aspect.

According to according to the sixth aspect of the invention, there is provided a network device operable with a communications network including the system according to the second aspect.

The adjustment of the first logic component responsive to monitoring a consistency of input data provides increased efficacy in the monitoring by the first logic component 104 and resource efficiency in the extent and frequency of retraining even as characteristics of the input data for the model 100 change or evolve.

## Brief Description of the Drawings

A preferred embodiment of the present invention will now be described with reference to the appended drawings, in which:

Figure 1 is a schematic illustration of an arrangement for monitoring a machine learning model in accordance with embodiments of the present invention.

Figure 2 is a flowchart of an exemplary method for monitoring a machine learning model in accordance with embodiments of the present invention.

## Description of Preferred Embodiments of the Invention

With reference to the accompanying figures, methods, apparatus, and systems according to preferred embodiments will be described.

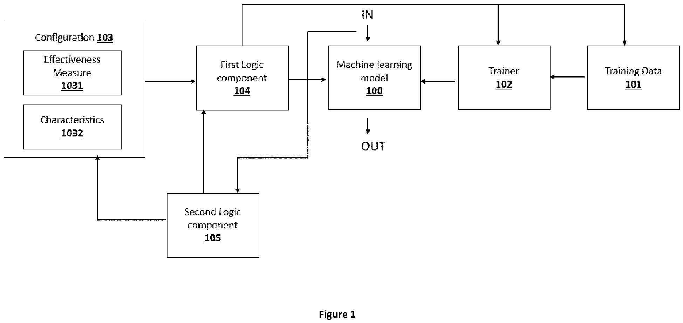

Figure 1 depicts a first logic component 104 as a hardware, software, firmware or combination component operable to trigger retraining of a machine learning model 100 based on monitoring of the model 100 and, in particular, monitoring of outputs of the model 100 for inputs supplied to the model 100. Retraining is triggered where one or more measures of effectiveness 1031 of the model 100 such as measures of efficacy or performance do or do not meet one or more predetermined measures of effectiveness 1031. A machine learning model 100 is a software approximation of a function $y=f(x)$ which is suitable for providing predictions of y based on training data sets 101, each of which is associated with an output y. Any training and/or retraining of the model 100 includes an identification of training data 101 on which basis the model 100 is trained, an identification of a method of training and an identification of a classification, prediction, modelling or other machine learning method employed by the model 100 to achieve its purpose as a function approximator.

The first logic component 104 is defined based on a configuration 103 including characteristics 1032 and one or more measures 1031 of effectiveness of the machine learning model 100. The characteristics 1032 of the first logic component 104 include one or more of: an arrangement and/or configuration 103 of one or more software components required for the implementation and/or deployment of the first logic component 104 such as a software stack identifying software for the operation of the first logic component 104 and/or an infrastructure configuration; an identification of one or more criteria for evaluating a measure of efficacy or performance of the model 100, such as a discrete or continuous measure of efficacy of the model 100 based on, for example, a comparison of model 100 outputs against known, discerned or inferred correct outputs to determine a measure of accuracy of the model 100 in approximating the modelled function, performance measures of the model such as a responsiveness, latency, throughput or other performance of the model 100, one or more other measures of the model 100 such as measures effected by discrete program code for measuring one or more features of the model 100, and other measures of effectiveness 1031 of the model 100, such measures themselves being used for comparison against effectiveness measures 1031 of the configuration 103 to determine efficacy; an identification of a method for retraining the model 100; and an identification of a classification method for the model 100. For example, software stack characteristics can be identified including, inter alia: operating system; middleware; transactional software; data storage such as database; container or other virtualisation environment; communication services; etc. For example, infrastructure configuration can include: one or more virtualised processor, memory and/or storage configurations; networking configuration; etc. Thus, the first logic component 104 being so defined operates to trigger retraining of the model 100 by a trainer 102 based on effectiveness measures 1031 of the configuration 103 on which basis the first logic component 104 is defined. The effectiveness measures 1031 are indications of an acceptable measure of effectiveness of the model 100, such as measures of efficacy or performance, for use by the first logic component 104 in monitoring the model 100. Exemplary effectiveness measures 1031 include any of those previously described such as: predetermined performance metrics for the model 100 such as measures of responsiveness, accuracy, consistency, accessibility and the like; one or more measures of an extent of uptime of the machine learning model 100; and one or more measures of an effectiveness 1031 of data security of the machine learning model 100.

The arrangement further includes a second logic component 105 as a hardware, software, firmware or combination component that is operable to trigger adjustment of the first logic component 104 including the adjusting the configuration 103. For example, the second logic component 105 can provide for the adjustment of the first logic component 104 by regenerating the first logic component 104 such as by rebuilding, relinking, reconfiguring or otherwise generating a replacement first logic component 104. In particular, the adjustment of the first logic component 104 includes the adjustment of the configuration 103 such as by adjusting the characteristics 1032 and/or the effectiveness measures 1031, on which basis the first logic component 104 is defined. The triggering of adjustment of the first logic component 104 by the second logic component 105 is responsive to monitoring of input data for the model 100 in operation. In particular, a consistency of input data to the model 100 in use is monitored. For example, a change in the nature, content, volume, or other characteristics 1032 of the input data for the model 100 in use can trigger the adjustment of the first logic component 104.

The model 100 is trained by a trainer 102 component as a hardware, software, firmware or combination component based on training data 101 so as to be operable to generate predictions, for an input, of an output as an approximation of a modelled function.

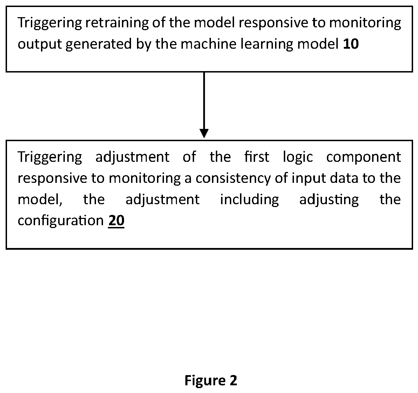

Figure 2 refers to an exemplary method for monitoring a machine learning model 100 in accordance with embodiments of the present invention. Initially, at step 10, a first logic component 104 triggers retraining of a model 100 responsive to monitoring output generated by the machine learning model 100, the first logic component 104 being defined based on a configuration 103 including a definition of an acceptable measure of effectiveness 1031 of the model 100 and one or more characteristics 1032 of the first logic component 104. Subsequently, at step 20, a second logic component 105 triggers adjustment of the first logic component 104 responsive to monitoring a consistency of input data to the model 100, the adjustment including adjusting the configuration 103.

In use, the second logic component 105 is arranged to monitor consistency of input data to the model 100 and responsive to the monitoring to trigger the adjustment of the first logic component 104. For example, where input data for the model 100 departs or deviates from one or more locally historic (e.g. relatively temporally recent) measures or indicators of consistency, then a change in the nature, volume, content or other characteristics of the input data is identified and the first logic component 104 is adjusted. The adjustment of the first logic component 104 in response to a change in consistency of model input data provides for the refinement of the first logic component 104 in the nature and mechanism of its monitoring of the operation of the model 100 by way of output data of the model 100, including the determination of the criteria for triggering retraining of the model 100 by the first logic component 104. Thus, in this way the second logic component 105 provides for adjustment to the retrain triggering and monitoring of the first logic component 104 to take into account changes to the nature, volume or other characteristics of input data to the model 100.

The adjustment of the first logic component 104 is affected by adjusting the configuration 103 such as by adjusting the characteristics 1032 of the configuration 103. For example, one or more criteria for the evaluation of a measure of effectiveness 1031 of the model 100 may be adjusted. Additionally, or alternatively, one or more of a retraining or classification method selection may be adjusted by being substituted for an alternative. Whereas the first logic component 104 is operable to trigger retraining of the machine learning model 100, such retraining is conducted by the first logic component 104 so adjusted, on the basis of the adjustment(s) to the configuration 103. Accordingly, the first logic component 104 so adjusted results in an adjusted monitoring of the model 100 and an adjusted trigger for retraining the model 100. Such adjustment provides increased efficacy in the monitoring by the first logic component 104 and resource efficiency in the extent and frequency of retraining even as characteristics of the input data for the model 100 change or evolve.

Statistical Tests are used to determine if there is a statistically significant change in each feature of the data input for prediction. If there is a significant change then this is used to determine if model regeneration is required.

In some arrangements, genetic algorithms may be used to determine a configuration 103 such as a genetic search and simulation process as are known in the art. For example, such an algorithm can comprise; data preprocessing measurements, monitoring measures and prediction model retraining components.

Insofar as embodiments of the invention described are implementable, at least in part, using a software-controlled programmable processing device, such as a microprocessor, digital signal processor or other processing device, data processing apparatus or system, it will be appreciated that a computer program for configuring a programmable device, apparatus or system to implement the foregoing described methods is envisaged as an aspect of the present invention. The computer program may be embodied as source code or undergo compilation for implementation on a processing device, apparatus or system or may be embodied as object code, for example.

Suitably, the computer program is stored on a carrier medium in machine or device readable form, for example in solid-state memory, magnetic memory such as disk or tape, optically or magneto-optically readable memory such as compact disk or digital versatile disk etc., and the processing device utilises the program or a part thereof to configure it for operation. The computer program may be supplied from a remote source embodied in a communications medium such as an electronic signal, radio frequency carrier wave or optical carrier wave. Such carrier media are also envisaged as aspects of the present invention.

It will be understood by those skilled in the art that, although the present invention has been described in relation to the above described example embodiments, the invention is not limited thereto and that there are many possible variations and modifications which fall within the scope of the invention.

The scope of the invention may include other novel features or combinations of features disclosed herein. The applicant hereby gives notice that new claims may be formulated to such features or combinations of features during prosecution of this application or of any such further applications derived therefrom. In particular, with reference to the appended claims, features from dependent claims may be combined with those of the independent claims and features from respective independent claims may be combined in any appropriate manner and not merely in the specific combinations enumerated in the claims.

**Claims**

1. A computer-implemented method of monitoring a machine learning model, wherein the model is trained by a training process based on training data to model an approximation of a function such that, in use, the model generates output data for given input data, the method comprising:

   a first logic component triggering retraining of the model responsive to monitoring output generated by the model, wherein the first logic component is defined based on a configuration including a definition of an acceptable measure of effectiveness of the model and one or more characteristics of the first logic component;
   a second logic component triggering adjustment of the first logic component responsive to monitoring a consistency of input data to the model, the adjustment including adjusting the configuration.

2. The method according to claim 1, wherein any of the first and second logic components are hardware, software, firmware or combination components.

3. The method according to claim 1, wherein the characteristics of the first logic component include one or more of: an identification of one or more criteria for evaluating a measure of effectiveness of the model; an identification of a method for retraining the model; and an identification of a classification method for the model.

4. The method according to claim 1, wherein the configuration is stored in a file or a database.

5. The method according to any one of claims 1 to 4, wherein the acceptable measure of effectiveness includes one or more of: predetermined performance metrics; one or more measures of an extent of uptime of the machine learning model; and one or more measures of an effectiveness of data security of the machine learning model.

6. The method according to any one of claims 1 to 5, wherein the configuration comprises at least one dataset including one or more of: training data; test data; and prediction data related to the machine learning model.

7. A system comprising:

   a first logic component arranged to trigger retraining of the model responsive to monitoring output generated by the model, wherein the first logic component is defined based on a configuration including a definition of an acceptable measure of effectiveness of the model and one or more characteristics of the first logic component;
   a second logic component arranged to trigger adjustment of the first logic component responsive to monitoring a consistency of input data to the model, the adjustment including adjusting the configuration.

8. A computer system including a processor and memory storing computer program code for performing the steps of any of claims 1 to 7.

9. A computer program element comprising computer program code to, when loaded into a computer system and executed thereon, cause the computer to perform the steps of a method as claimed in claim 1.

10. A network device operable with a communications network including the system of claim 9.

Figure 1

Triggering retraining of the model responsive to monitoring output generated by the machine learning model **10**

Triggering adjustment of the first logic component responsive to monitoring a consistency of input data to the model, the adjustment including adjusting the configuration <u>**20**</u>

**Figure 2**

Europäisches
Patentamt

European
Patent Office

Office européen
des brevets

# EUROPEAN SEARCH REPORT

**Application Number**

EP 23 21 0159

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/410390 A1 (FU SHENGYU [US] ET AL) 31 December 2020 (2020-12-31) * paragraphs [0003] - [0061] * ----- | 1-10 | INV. G06F11/30 G06N20/00 |
| A | WO 2022/200065 A1 (BRITISH TELECOMM [GB]) 29 September 2022 (2022-09-29) * pages 1-6 * ----- | 1-10 | |

**TECHNICAL FIELDS SEARCHED (IPC)**

G06F
G06N

The present search report has been drawn up for all claims

| Place of search | Date of completion of the search | Examiner |
|---|---|---|
| The Hague | 6 May 2024 | Moran, Matthew |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
............................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 23 21 0159

This annex lists the patent family members relating to the patent documents cited in the above-mentioned European search report.
The members are as contained in the European Patent Office EDP file on
The European Patent Office is in no way liable for these particulars which are merely given for the purpose of information.

06-05-2024

| Patent document cited in search report | | Publication date | Patent family member(s) | | Publication date |
|---|---|---|---|---|---|
| US 2020410390 | A1 | 31-12-2020 | CN | 114026536 A | 08-02-2022 |
| | | | EP | 3991026 A1 | 04-05-2022 |
| | | | US | 2020410390 A1 | 31-12-2020 |
| | | | WO | 2020263402 A1 | 30-12-2020 |
| WO 2022200065 | A1 | 29-09-2022 | EP | 4315187 A1 | 07-02-2024 |
| | | | WO | 2022200065 A1 | 29-09-2022 |

EPO FORM P0459

For more details about this annex : see Official Journal of the European Patent Office, No. 12/82